# EUROPEAN PATENT APPLICATION

(11) **EP 4 572 369 A1**
(43) Date of publication of application: **18.06.2025**
(21) Application number: 23852932.5
(22) Date of filing: 08.08.2023
(51) Int. Cl.: H04W 24/02, H04W 24/10, H04W 28/086, H04W 28/08, H04W 36/22, H04W 36/36, H04W 52/02, G06N 20/00, H04W 92/20

(54) **MACHINE LEARNING-BASED OPTIMIZATION IN WIRELESS COMMUNICATION SYSTEM**

(30) Priority: 08.08.2022 US 202263395873 P
(71) Applicant: LG Electronics Inc., Yeongdeungpo-gu Seoul 07336 (KR)
(72) Inventor: BYUN, Daewook, Seoul 06772 (KR); KIM, Seokjung, Seoul 06772 (KR)
(74) Representative: Mooser, Sebastian Thomas
(86) International application number: PCT/KR2023/011648
(87) International publication number: WO 2024/035056

(57) **Abstract**

The present specification relates to machine learning (ML)-based optimization. A method carried out by a first network node in a wireless communication system, according to one embodiment of the present disclosure, comprises the steps of: receiving, from a second network node, a first message including capability information indicating whether the second network node is capable of supporting a ML model; on the basis that the capability information indicates that the second network node is capable of supporting the ML model, transmitting, to the second network node, a second message for requesting for input data for model processing generated by the ML model; receiving the input data from the second network node; carrying out the model processing on the basis of at least one among the input data received from the second network node or a measurement result received from a user equipment (UE); acquiring output data inferred from the model processing; and carrying out one or more operations on the basis of the output data.

## Description

### Technical Field

The present disclosure relates to machine learning (ML) based optimization.

### Background Art

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

In a wireless communication system, optimization can be performed using artificial intelligence (AI)/machine learning (ML) techniques. For this optimization, an AI/ML model can be used. For example, the AI/ML model can include network energy saving, load balancing, and/or mobility optimization.

### Disclosure of Invention

### Solution to Problem

According to an embodiment of the present disclosure, a method performed by a first network node in a wireless communication system comprises: receiving, from a second network node, a first message comprising capability information informing whether the second network node can support a machine learning (ML) model; transmitting, to the second network node, a second message for requesting input data for a model processing generated by the ML model based on the capability information informing that the second network node can support the ML model; receiving, from the second network node, the input data; performing the model processing based on at least one of the input data received from the second network node or a measurement result received from a user equipment (UE); obtaining output data inferred from the model processing; and performing one or more actions based on the output data.

According to an embodiment of the present disclosure, a first network node in a wireless communication system comprises: a transceiver; a memory; and at least one processor operatively coupled to the transceiver and the memory, wherein the memory stores instructions that, based on being executed by the at least one processor, perform operations comprising: receiving, from a second network node, a first message comprising capability information informing whether the second network node can support a machine learning (ML) model; transmitting, to the second network node, a second message for requesting input data for a model processing generated by the ML model based on the capability information informing that the second network node can support the ML model; receiving, from the second network node, the input data; performing the model processing based on at least one of the input data received from the second network node or a measurement result received from a user equipment (UE); obtaining output data inferred from the model processing; and performing one or more actions based on the output data.

According to an embodiment of the present disclosure, a user equipment (UE) in a wireless communication system comprises: a transceiver; a memory; and at least one processor operatively coupled to the transceiver and the memory, wherein the memory stores instructions that, based on being executed by the at least one processor, perform operations comprising: receiving, from a first network node, a measurement configuration; performing a measurement on one or more cells based on the measurement configuration; transmitting, to the first network node, a measurement report comprising a measurement result obtained based on the measurement; receiving, from the first network node, a mobility command generated based on the measurement result and a model processing related to a machine learning (ML) model; and performing a mobility to a target cell among the one or more cells based on the mobility command, wherein the first network node is configured to: receive, from a second network node, a first message comprising capability information informing whether the second network node can support the ML model; transmit, to the second network node, a second message for requesting input data for the model processing generated by the ML model based on the capability information informing that the second network node can support the ML model; receive, from the second network node, the input data; perform the model processing based on the input data and the measurement result; obtain output data inferred from the model processing; and generate the mobility command based on the output data.

According to an embodiment of the present disclosure, a method performed by a user equipment (UE) in a wireless communication system comprises: receiving, from a first network node, a measurement configuration; performing a measurement on one or more cells based on the measurement configuration; transmitting, to the first network node, a measurement report comprising a measurement result obtained based on the measurement; receiving, from the first network node, a mobility command generated based on the measurement result and a model processing related to a machine learning (ML) model; and performing a mobility to a target cell among the one or more cells based on the mobility command, wherein the first network node is configured to: receive, from a second network node, a first message comprising capability information informing whether the second network node can support the ML model; transmit, to the second network node, a second message for requesting input data for the model processing generated by the ML model based on the capability information informing that the second network node can support the ML model; receive, from the second network node, the input data; perform the model processing based on the input data and the measurement result; obtain output data inferred from the model processing; and generate the mobility command based on the output data.

According to an embodiment of the present disclosure, an apparatus configured to operate in a wireless communication system comprises: at least one processor; and a memory operatively coupled to the at least one processor and storing instructions that, based on being executed by the at least one processor, perform operations comprising: receiving, from a second network node, a first message comprising capability information informing whether the second network node can support a machine learning (ML) model; transmitting, to the second network node, a second message for requesting input data for a model processing generated by the ML model based on the capability information informing that the second network node can support the ML model; receiving, from the second network node, the input data; performing the model processing based on at least one of the input data received from the second network node or a measurement result received from a user equipment (UE); obtaining output data inferred from the model processing; and performing one or more actions based on the output data.

According to an embodiment of the present disclosure, a non-transitory computer readable medium (CRM) has stored thereon a software code implementing instructions that, based on being executed by at least one processor, perform operations comprising: receiving, from a second network node, a first message comprising capability information informing whether the second network node can support a machine learning (ML) model; transmitting, to the second network node, a second message for requesting input data for a model processing generated by the ML model based on the capability information informing that the second network node can support the ML model; receiving, from the second network node, the input data; performing the model processing based on at least one of the input data received from the second network node or a measurement result received from a user equipment (UE); obtaining output data inferred from the model processing; and performing one or more actions based on the output data.

### Brief Description of Drawings

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIG. 5 shows an example of an overall architecture of an NG-RAN to which implementations of the present disclosure is applied.
FIG. 6 shows an example of an overall architecture for separation of gNB-CU-CP and gNB-CU-UP to which implementations of the present disclosure is applied.
FIG. 7 shows an example of a signal flow for Xn setup according to an embodiment of the present disclosure.
FIG. 8 shows an example of an NG-RAN node configuration update procedure according to an embodiment of the present disclosure.
FIG. 9 shows an example of a functional framework for RAN intelligence according to an embodiment of the present disclosure.
FIG. 10 shows an example of a signal flow for model training and model inference both located in RAN node according to an embodiment of the present disclosure.
FIG. 11 shows an example of a method performed by a first network node according to an embodiment of the present disclosure.
FIG. 12 shows an example of a signal flow between UE and network nodes according to an embodiment of the present disclosure.
FIG. 13 shows an example of a signal flow for providing information related to an AI/ML model according to an embodiment of the present disclosure.

### Mode for the Invention

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, Band C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

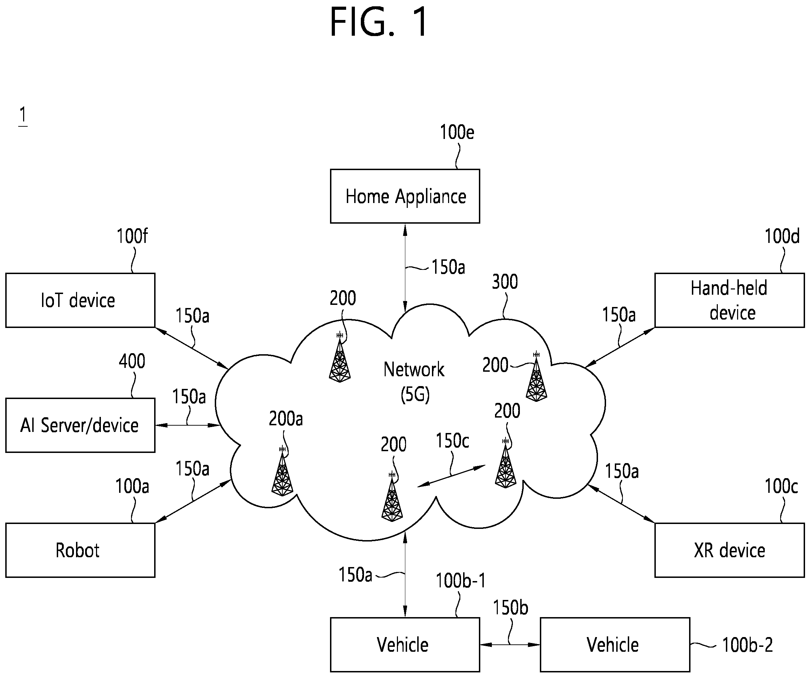

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

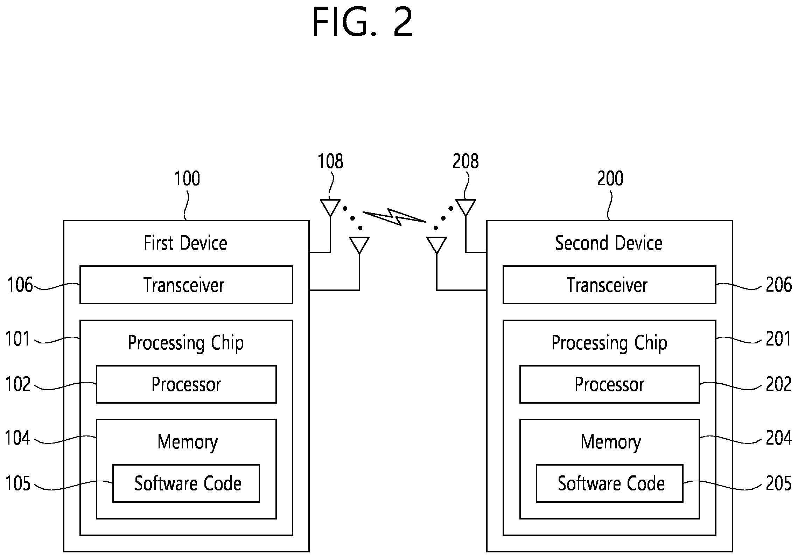

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names. FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

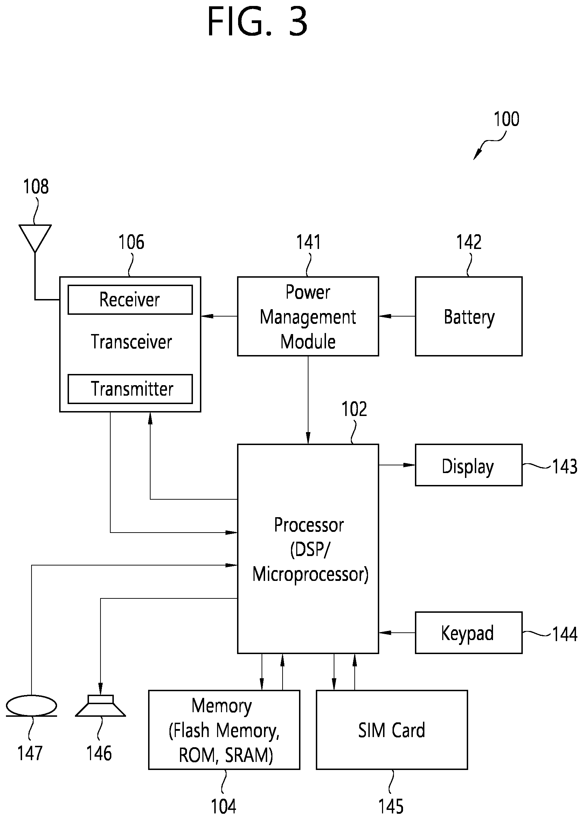

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

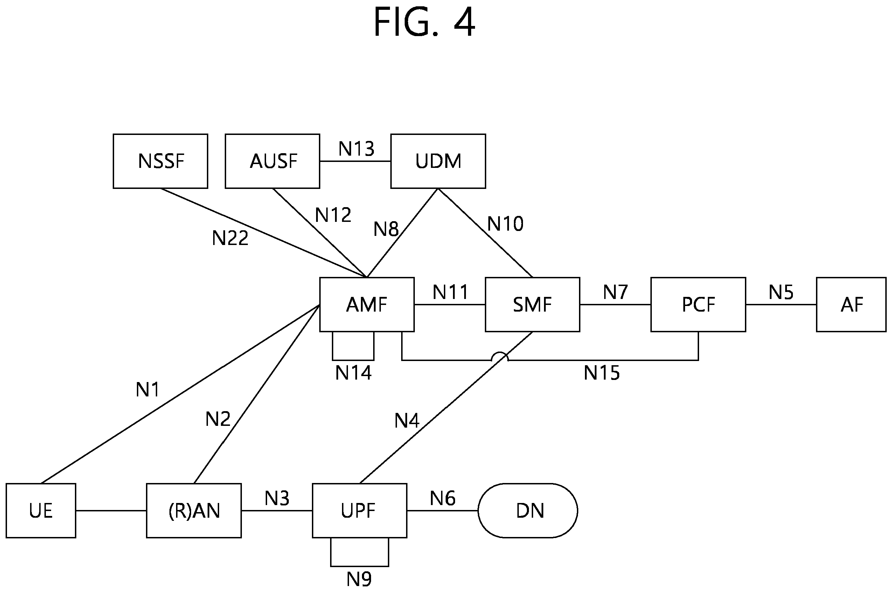

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)
- Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

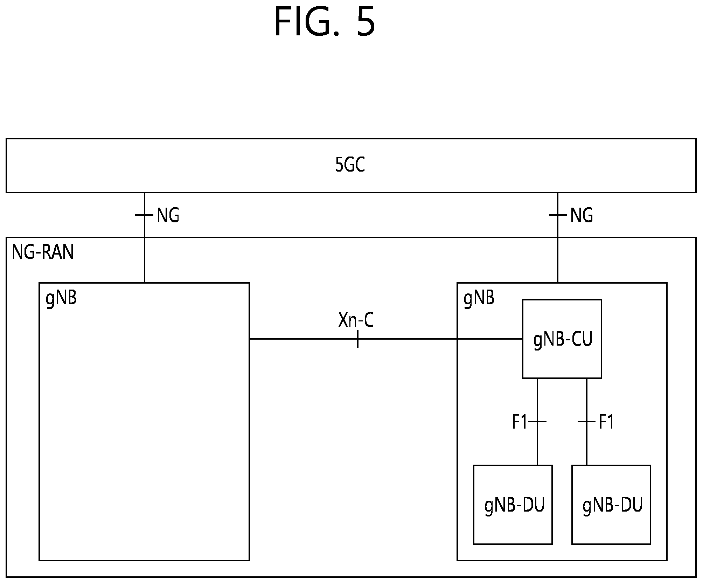

FIG. 5 shows an example of an overall architecture of an NG-RAN to which implementations of the present disclosure is applied.

Referring to FIG. 5, a Next Generation (NG)-Radio Access Network (RAN) consists of a set of gNBs connected to the 5GC through the NG interface. Alternatively, the NG-RAN may consist of a set of ng-eNBs, and the ng-eNB may consist of an ng-eNB-CU and one or more ng-eNB-DUs. The ng-eNB-CU and the ng-eNB-DU are connected through the W1 interface. The general principles for the overall architecture of the NG-RAN described below also apply to the ng-eNB and W1 interfaces, unless explicitly specified otherwise.

gNBs can be interconnected through the Xn interface.

A gNB may consist of a gNB Central Unit (gNB-CU) and one or more gNB Distributed Unit (gNB-DU). A gNB-CU and a gNB-DU is connected via F1 interface. For convenience of description, gNB-CU may be simply denoted as CU and gNB-DU as DU.

The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB-DU is a logical node hosting RLC, MAC and PHY layers of the gNB or en-gNB, and its operation is partly controlled by gNB-CU. One gNB-DU supports one or multiple cells. One cell is supported by only one gNB-DU. The gNB-DU terminates the F1 interface connected with the gNB-CU.

One gNB-DU may be connected to only one gNB-CU. Alternatively, for resiliency, a gNB-DU may be connected to multiple gNB-CUs by appropriate implementation.

NG, Xn and F1 are logical interfaces.

For NG-RAN, the NG and Xn-C interfaces for a gNB consisting of a gNB-CU and gNB-DUs, terminate in the gNB-CU. For E-UTRAN-NR Dual Connectivity (EN-DC), the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

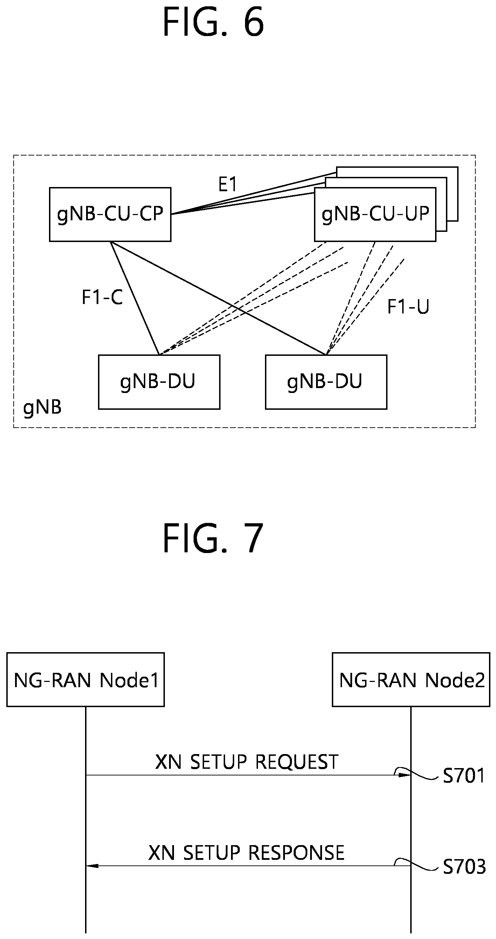

FIG. 6 shows an example of an overall architecture for separation of gNB-CU-CP and gNB-CU-UP to which implementations of the present disclosure is applied.

Referring to FIG. 6, a gNB may consist of a gNB-CU Control Plane (gNB-CU-CP), multiple gNB-CU User Planes (gNB-CU-UPs), and multiple gNB-DUs. For convenience of description, gNB-CU-CP may be simply denoted as CU-CP and gNB-CU-UP as CU-UP.

The gNB-CU-CP is a logical node hosting the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

The gNB-CU-UP is a logical node hosting the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-D.

The gNB-CU-CP is connected to the gNB-DU through the F1-C interface.

The gNB-CU-UP is connected to the gNB-DU through the F1-U interface.

The gNB-CU-UP is connected to the gNB-CU-CP through the E1 interface.

One gNB-DU is connected to only one gNB-CU-CP.

One gNB-CU-UP may be connected to only one gNB-CU-CP. Alternatively, for resiliency, a gNB-DU and/or a gNB-CU-UP may be connected to multiple gNB-CU-CPs by appropriate implementation.

One gNB-DU may be connected to multiple gNB-CU-UPs under the control of the same gNB-CU-CP.

One gNB-CU-UP may be connected to multiple DUs under the control of the same gNB-CU-CP;

The connectivity between a gNB-CU-UP and a gNB-DU may be established by the gNB-CU-CP using Bearer Context Management functions.

The gNB-CU-CP may select the appropriate gNB-CU-UP(s) for the requested services for the UE. In case of multiple CU-Ups, they belong to same security domain.

Data forwarding between gNB-CU-UPs during intra-gNB-CU-CP handover within a gNB may be supported by Xn-U.

FIG. 7 shows an example of a signal flow for Xn setup according to an embodiment of the present disclosure.

The purpose of the Xn Setup procedure is to exchange application level configuration data needed for two NG-RAN nodes to interoperate correctly over the Xn-C interface.

If Xn-C signalling transport is shared among multiple Xn-C interface instances, one Xn Setup procedure is issued per Xn-C interface instance to be setup, i.e. several Xn Setup procedures may be issued via the same TNL association after that TNL association has become operational.

Exchange of application level configuration data also applies between two NG-RAN nodes in case the SN (i.e. the gNB) does not broadcast system information other than for radio frame timing and SFN.

The Xn setup procedure uses non UE-associated signalling.

Referring to FIG. 7, in step S701, the NG-RAN node 1 initiates the Xn setup procedure by sending the XN SETUP REQUEST message to the candidate NG-RAN node 2.

In step S703, the candidate NG-RAN node 2 replies with the XN SETUP RESPONSE message i.e., the candidate NG-RAN node 2 sends the XN SETUP RESPONSE message to the NG-RAN node 1.

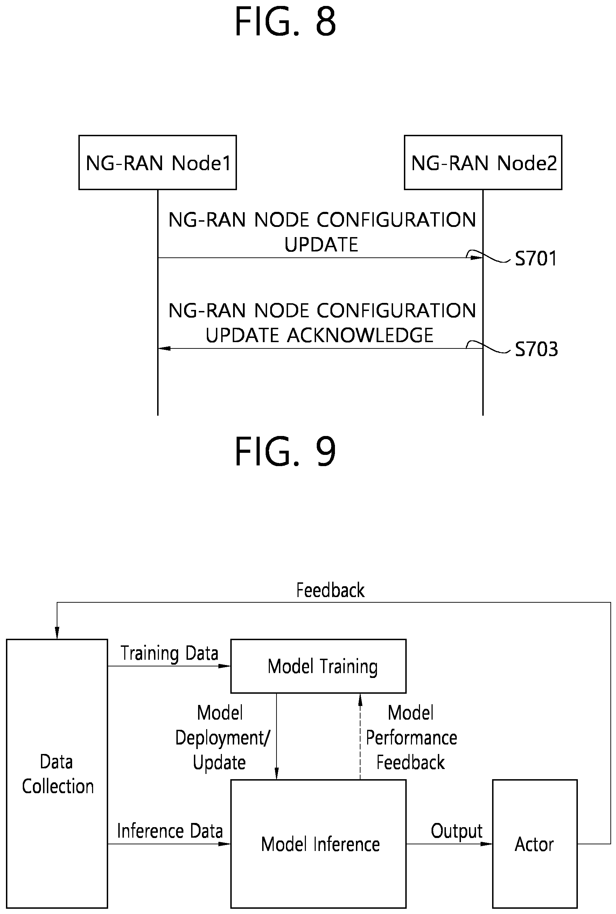

FIG. 8 shows an example of an NG-RAN node configuration update procedure according to an embodiment of the present disclosure.

The purpose of the NG-RAN node Configuration Update procedure is to update application level configuration data needed for two NG-RAN nodes to interoperate correctly over the Xn-C interface.

Update of application level configuration data also applies between two NG-RAN nodes in case the SN (i.e. the gNB) does not broadcast system information other than for radio frame timing and SFN.

The NG-RAN node configuration update procedure uses non UE-associated signalling.

Referring to FIG. 8, in step S801, the NG-RAN node 1 initiates the NG-RAN node configuration update procedure by sending the NG-RAN NODE CONFIGURATION UPDATE message to a peer NG-RAN node 2.

In step S803, the peer NG-RAN node 2 replies with the NG-RAN NODE CONFIGURATION UPDATE ACKNOWLEDGE message i.e., the peer NG-RAN node 2 sends the NG-RAN NODE CONFIGURATION UPDATE ACKNOWLEDGE message to the NG-RAN node 1.

Hereinafter, features related to AI/ML are described.

FIG. 9 shows an example of a functional framework for RAN intelligence according to an embodiment of the present disclosure.

In FIG. 9, the common terminologies related to the functional framework for RAN intelligence are illustrated.

Data Collection is a function that provides input data to Model training and Model inference functions. AI/ML algorithm specific data preparation (e.g., data pre-processing and cleaning, formatting, and transformation) is not carried out in the Data Collection function.

Examples of input data may include measurements from UEs or different network entities, feedback from Actor, output from an AI/ML model.
- Training Data: Data needed as input for the AI/ML Model Training function.
- Inference Data: Data needed as input for the AI/ML Model Inference function.

Model Training is a function that performs the AI/ML model training, validation, and testing which may generate model performance metrics as part of the model testing procedure. The Model Training function is also responsible for data preparation (e.g., data pre-processing and cleaning, formatting, and transformation) based on Training Data delivered by a Data Collection function, if required.
- Model Deployment/Update: Used to initially deploy a trained, validated, and tested AI/ML model to the Model Inference function or to deliver an updated model to the Model Inference function.

Model Inference is a function that provides AI/ML model inference output (e.g., predictions or decisions). Model Inference function may provide Model Performance Feedback to Model Training function when applicable. The Model Inference function is also responsible for data preparation (e.g., data pre-processing and cleaning, formatting, and transformation) based on Inference Data delivered by a Data Collection function, if required.
- Output: The inference output of the AI/ML model produced by a Model Inference function. Details of inference output are use case specific.
- Model Performance Feedback: It may be used for monitoring the performance of the AI/ML model, when available.

Actor is a function that receives the output from the Model Inference function and triggers or performs corresponding actions. The Actor may trigger actions directed to other entities or to itself.
- Feedback: Information that may be needed to derive training data, inference data or to monitor the performance of the AI/ML Model and its impact to the network through updating of KPIs and performance counters.

The use cases of the AI/ML functionality may include AI/ML-based Network Energy Saving, AI/ML-based Load Balancing, and/or AI/ML-based Mobility Optimization. Among these use cases, a use case for AI/ML-based Mobility Optimization will be described.

Mobility management is the scheme to guarantee the service-continuity during the mobility by minimizing the call drops, RLFs, unnecessary handovers, and ping-pong. For the future high-frequency network, as the coverage of a single node decreases, the frequency for UE to handover between nodes becomes high, especially for high-mobility UE. In addition, for the applications characterized with the stringent QoS requirements such as reliability, latency etc., the QoE is sensitive to the handover performance, so that mobility management should avoid unsuccessful handover and reduce the latency during handover procedure. However, for the conventional method, it is challengeable for trial-and-error-based scheme to achieve nearly zero-failure handover. The unsuccessful handover cases are the main reason for packet dropping or extra delay during the mobility period, which is unexpected for the packet-drop-intolerant and low-latency applications. In addition, the effectiveness of adjustment based on feedback may be weak due to randomness and inconstancy of transmission environment. Besides the baseline case of mobility, areas of optimization for mobility include dual connectivity, CHO, and DAPS, which each has additional aspects to handle in the optimization of mobility.

Mobility aspects of SON that can be enhanced by the use of AI/ML include:
- Reduction of the probability of unintended events;
- UE Location/Mobility/Performance prediction; and/or
- Traffic Steering.

### (1) Reduction of the probability of unintended events associated with mobility

Examples of such unintended events are:
- Intra-system Too Late Handover: A radio link failure (RLF) occurs after the UE has stayed for a long period of time in the cell; the UE attempts to re-establish the radio link connection in a different cell.
- Intra-system Too Early Handover: An RLF occurs shortly after a successful handover from a source cell to a target cell or a handover failure occurs during the handover procedure; the UE attempts to re-establish the radio link connection in the source cell.
- Intra-system Handover to Wrong Cell: An RLF occurs shortly after a successful handover from a source cell to a target cell or a handover failure occurs during the handover procedure; the UE attempts to re-establish the radio link connection in a cell other than the source cell and the target cell.
- Successful Handover: During a successful handover, there is underlying issue.

RAN Intelligence could observe multiple HO events with associated parameters, use this information to train its ML model and try to identify sets of parameters that lead to successful HOs and sets of parameters that lead to unintended events.

### (2) UE Location/Mobility/Performance Prediction

Predicting UE's location is a key part for mobility optimisation, as many RRM actions related to mobility (e.g., selecting handover target cells) can benefit from the predicted UE location/trajectory. UE mobility prediction is also one key factor in the optimization of early data forwarding particularly for CHO. UE Performance prediction when the UE is served by certain cells is a key factor in determining which is the best mobility target for maximisation of efficiency and performance.

### (3) Traffic Steering

Efficient resource handling can be achieved adjusting handover trigger points and selecting optimal combination of Pcell/PSCell/Scells to serve a user.

Existing traffic steering can also be improved by providing a RAN node with information related to mobility or dual connectivity.

For example, before initiating a handover, the source gNB could use feedbacks on UE performance collected for successful handovers occurred in the past and received from neighbouring gNBs.

Similarly, for the case of dual connectivity, before triggering the addition of a secondary gNB or triggering SN change, an eNB could use information (feedbacks) received in the past from the gNB for successfully completed SN Addition or SN Change procedures.

In the two reported examples, the source RAN node of a mobility event, or the RAN node acting as Master Node (a eNB for EN-DC, a gNB for NR-DC) can use feedbacks received from the other RAN node, as input to an AI/ML function supporting traffic related decisions (e.g., selection of target cell in case of mobility, selection of a PSCell / Scell(s) in the other case), so that future decisions can be optimized.

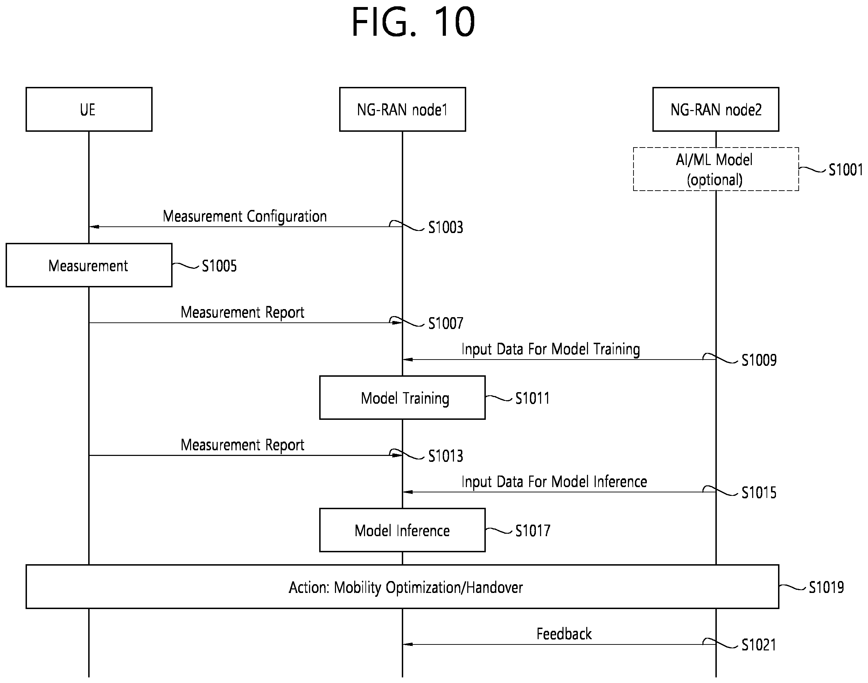

FIG. 10 shows an example of a signal flow for model training and model inference both located in RAN node according to an embodiment of the present disclosure.

Referring to FIG. 10, in step S1001, NG-RAN node 2 is assumed to optionally have an AI/ML model, which can generate required input such as resource status and utilization prediction/estimation etc.

In step S1003, NG-RAN node1 configures the measurement information on the UE side and sends configuration message to UE including configuration information.

In step S1005, UE collects the indicated measurement, e.g., UE measurements related to RSRP, RSRQ, SINR of serving cell and neighbouring cells.

In step S1007, UE sends measurement report message to NG-RAN node1 including the required measurement.

In step S1009, the NG-RAN node 1 obtains the input data for training from the NG-RAN node2, where the input data for training includes the required input information from the NG-RAN node 2. If the NG-RAN node 2 executes the AI/ML model, the input data for training can include the corresponding inference result from the NG-RAN node 2.

In step S1011, the NG-RAN node 1 may perform model training based on the measurement report received from UE in step S1007 and the input data for model training received from NG-RAN node 2 in step S1009. Required measurements are leveraged to training AI/ML model for mobility optimization.

In step S1013, NG-RAN node1 obtains the measurement report as inference data for real-time UE mobility optimization.

In step S1015, the NG-RAN node 1 obtains the input data for inference from the NG-RAN node 2 for UE mobility optimization, where the input data for inference includes the required input information from the NG-RAN node 2. If the NG-RAN node 2 executes the AI/ML model, the input data for inference can include the corresponding inference result from the NG-RAN node 2.

In step S1017, the NG-RAN node 1 may perform model Inference based on the measurement report received from UE in step S1013 and input data for model inference received from NG-RAN node 2 in step S1015. Required measurements are leveraged into Model Inference to output the prediction, including e.g., UE trajectory prediction, target cell prediction, target NG-RAN node prediction, etc.

In step S1019, according to the prediction, recommended actions or configuration, the NG-RAN node 1, the target NG-RAN node (represented by NG-RAN node 2 of this step in the flowchart), and UE perform the Mobility Optimization / handover procedure to hand over UE from NG-RAN node 1 to the target NG-RAN node.

In step S1021, the NG-RAN node 2 sends feedback information after mobility optimization action to the NG-RAN node 1.

UE mobility information for training purposes is sent to gNBs that requested such information or when triggered.

Meanwhile, in FIG. 10, the input data provided through steps S1009 and S1015 are AI/ML related information provided by MG-RAN node 2 by the request of NG-RAN node 1. If NG-RAN node 1 does not know whether NG-RAN node 2 has an AI/ML model, NG-RAN node 1 may not request AI/ML related information to NG-RAN node 2, or even if it makes a request, it may not receive the input data requested through steps S1009 and S1015, and thus NG-RAN node 1 may not perform AI/ML model training and AI/ML model inference properly/correctly. A solution is needed to solve this.

Therefore, various embodiments of the present disclosure propose a solution in which a base station having an AI/ML model informs a base station performing AI/ML model training and AI/ML model inference that it has an AI/ML model when AI/ML-based mobility optimization must be performed between base stations. When notifying the availability of an AI/ML model, the base station having the AI/ML model may also notify whether it can additionally provide information for AI/ML model training and/or information for AI/ML model inference. Additionally, if there is a change in whether it can provide information for AI/ML model training and AI/ML model inference, the base station having the AI/ML model may notify this. The proposed method can also be applied when AI/ML-based energy saving and load balancing must be performed between base stations.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

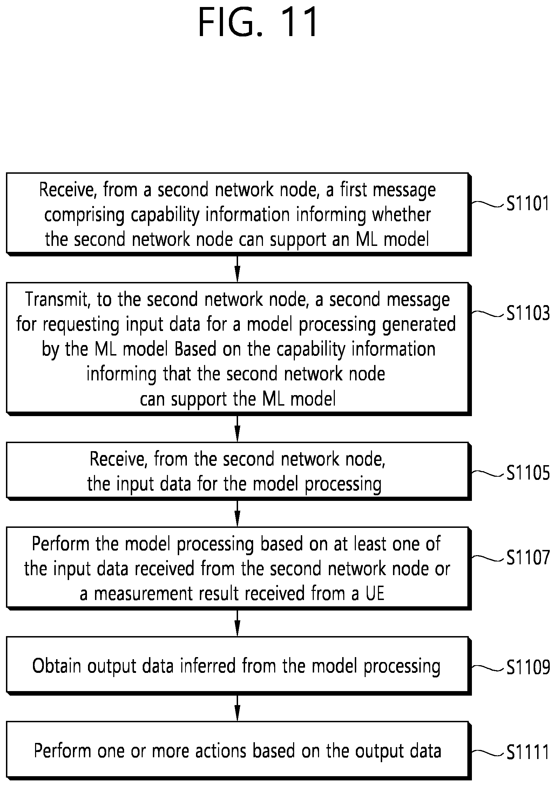

FIG. 11 shows an example of a method performed by a first network node according to an embodiment of the present disclosure. In the present disclosure, network node may comprise a base station (BS).

Referring to FIG. 11, in step S1101, the first network node may receive, from a second network node, a first message comprising capability information informing whether the second network node can support a machine learning (ML) model.

In step S1103, the first network node may transmit, to the second network node, a second message for requesting input data for a model processing generated by the ML model based on the capability information informing that the second network node can support the ML model.

In step S1105, the first network node may receive, from the second network node, the input data for the model processing.

In step S1107, the first network node may perform the model processing based on at least one of the input data received from the second network node or a measurement result received from a user equipment (UE).

In step S1109, the first network node may obtain output data inferred from the model processing.

In step S1111, the first network node may perform one or more actions based on the output data.

According to various embodiments, the model processing may comprise at least one of a model training or a model inference.

According to various embodiments, the first network node may perform the model training based on at least one of input data for the model training received from the second network node or the measurement result received from the UE. After performing the model training, the first network node perform the model inference based on at least one of input data for the model inference received from the second network node or the measurement result received from the UE. The output data may be obtained based on the model inference.

According to various embodiments, the first message may be an Xn establishment request message. The first network node may transmit, to the second network node, an Xn establishment response message in response to the Xn establishment request message.

According to various embodiments, the Xn establishment response message may be the second message.

According to various embodiments, the first message may comprise data availability information informing whether the second network node can provide the input data for the model processing.

According to various embodiments, the second message may be transmitted to the second network node based on the data availability information informing that the second network node can provide the input data for the model processing.

According to various embodiments, the first network node may receive, from the second network node, information informing a change of the data availability information.

According to various embodiments, the first network node may receive, from the second network node, a radio access network (RAN) node configuration update message. The first network node may transmit, to the second network node, a RAN node configuration update acknowledge message. The information informing the change of the data availability information may be included in the RAN node configuration update message.

According to various embodiments, the first network node may transmit, to the second network node, a radio access network (RAN) node configuration update message. The first network node may receive, from the second network, a RAN node configuration update acknowledge message. The information informing the change of the data availability information may be included in the RAN node configuration update acknowledge message.

According to various embodiments, the change of the data availability information may comprise at least one of: a change from the second network node being able to provide the input data for the model processing to the second network node being unable to provide the input data for the model processing; or a change from the second network node being unable to provide the input data for the model processing to the second network node being able to provide the input data for the model processing.

According to various embodiments, the one or more actions may comprise at least one of a network energy saving action, a load balancing action, or a mobility optimization action.

According to various embodiments, the network energy saving action may comprise at least one of a cell activation, a cell deactivation or commanding the UE to perform a mobility. The input data for the network energy saving action may comprise at least one of a current/predicted energy efficiency, a current/predicted resource status, or a current energy status. The output data for the network energy saving action may comprise at least one of an energy saving strategy, an predicted energy efficiency, an predicted energy status or a model output validity time.

According to various embodiments, the load balancing action may comprise commanding the UE to perform a mobility. The input data for the load balancing action may comprise at least one of a current/predicted resource status or a UE performance measurement for a network node whose traffic load is lower than the first network. The output data for the load balancing action may comprise at least one of a selection of a target cell for load balancing, predicted resource status information for the first network node, predicted resource status information for a neighbor network node, a model output validity time, or UEs predicted to be selected to perform a mobility to a target network.

According to various embodiments, the mobility optimization action may comprise commanding the UE to perform a mobility. The input data for the mobility optimization action may comprise at least one of UE trajectory prediction, a current/predicted resource status or a current/predicted UE traffic. The output data for the mobility optimization action may comprise at least one of a UE trajectory prediction, estimated arrival probability in conditional handover (CHO), a predicted handover target node, candidate cells predicted in CHO, handover execution timing, a resource reservation time window predicted for CHO, UE traffic prediction or model output validity time.

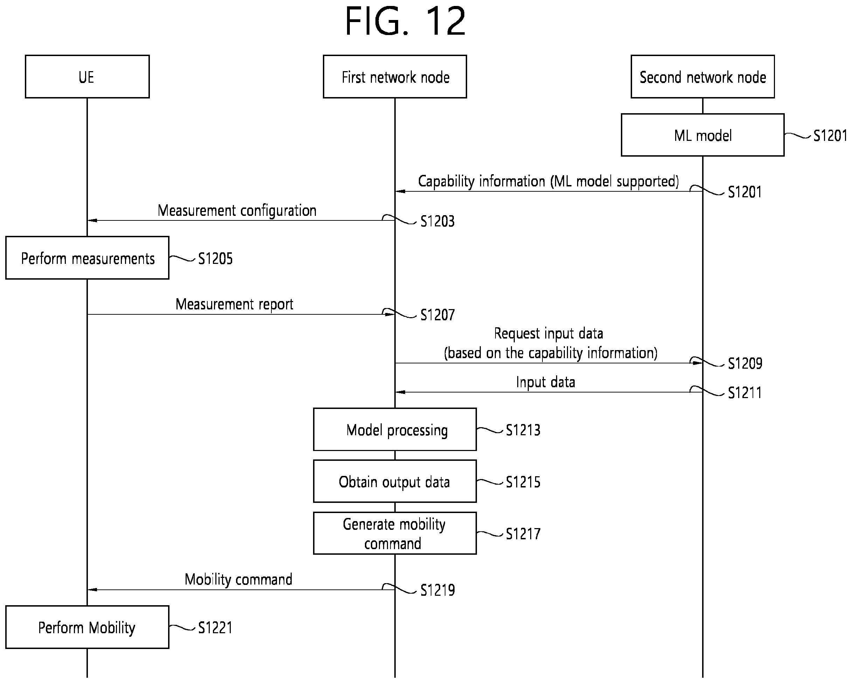

FIG. 12 shows an example of a signal flow between UE and network nodes according to an embodiment of the present disclosure.

Referring to FIG. 12, in step S1201, a first network node may receive, from a second network node, a first message comprising capability information informing whether the second network node can support a machine learning (ML) model.

In step S1203, the UE may receive, from the first network node, a measurement configuration.

In step S1205, the UE may perform a measurement on one or more cells based on the measurement configuration.

In step S1207, the UE may transmit, to the first network node, a measurement report comprising a measurement result obtained based on the measurement.

In step S1209, the first network node may transmit, to the second network node, a second message for requesting input data for a model processing generated by the ML model based on the capability information informing that the second network node can support the ML model.

In step S1211, the first network node may receive, from the second network node, the input data.

In step S1213, the first network node may perform the model processing based on the input data and the measurement result.

In step S1215, the first network node may obtain output data inferred from the model processing.

In step S1217, the first network node may generate the mobility command based on the output data. That is, the mobility command may be generated based on the measurement result and the model processing related to the ML model.

In step S1219, the UE may receive the mobility command from the first network.

In step S1221, the UE may perform a mobility to a target cell among the one or more cells based on the mobility command.

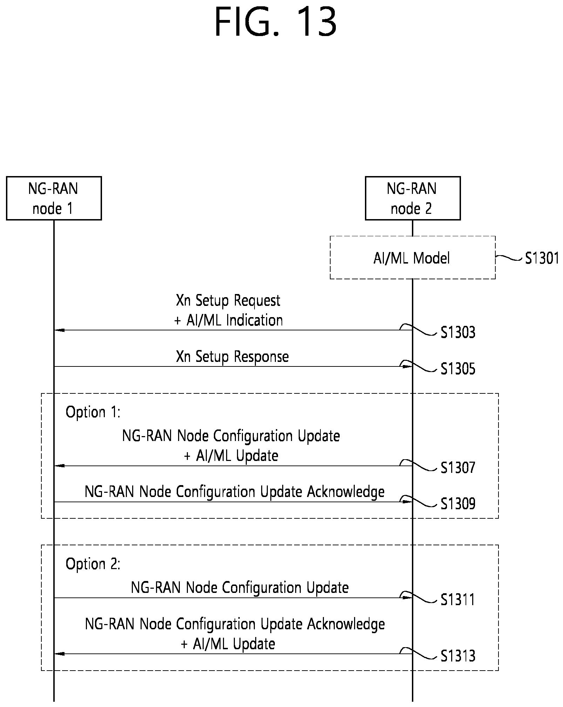

FIG. 13 shows an example of a signal flow for providing information related to an AI/ML model according to an embodiment of the present disclosure. FIG. 13 proposes a method for a base station (i.e., NG-RAN node 2) having an AI/ML model to inform a base station (i.e., NG-RAN node 1) performing AI/ML model training and AI/ML model inference that it has an AI/ML model when performing AI/ML-based mobility optimization between base stations.

Referring to FIG. 13, in step S1301, NG-RAN node 2 may have an AI/ML model for providing input data for AI/ML model training and AI/ML model inference that can be requested by an adjacent base station.

In step S1303, NG-RAN node 2 may use an Xn establishment request message to inform NG-RAN node 1 that it has an AI/ML model for providing AI/ML-related input data that can be requested by an adjacent base station (i.e., NG-RAN node 1). When notifying that it has an AI/ML model, the NG-RAN node 2 may also indicate whether it can additionally provide information for AI/ML model training or information for AI/ML model inference.

In step S1305, the NG-RAN node 1 that has received the Xn establishment request message may store the received information and use it when requesting AI/ML related input data to the NG-RAN node 2. The NG-RAN node 1 may transmit an Xn establishment response message to the NG-RAN node 2 in response to the Xn establishment request.

Depending on which NG-RAN node triggers/initiates the NG-RAN node configuration update, one of the following two options may be used:

### Option 1:

In step S1307, if there is a change in whether NG-RAN node 2 can provide input data for AI/ML model training and AI/ML model inference based on the AI/ML model, NG-RAN node 2 may provide the changed information to NG-RAN node 1 using the NG-RAN node configuration update message.

In step S1309, NG-RAN node 1, which receives the NG-RAN node configuration update message, may store the received information and transmit an NG-RAN node configuration update acknowledge message to NG-RAN node 2 in response.

### Option 2:

In step S1311, NG-RAN node 1 may transmit an NG-RAN node configuration update message to NG-RAN node 2.

In step S1313, when the NG-RAN node configuration update message is received, if there is a change in whether the NG-RAN node 2 can provide input data for AI/ML model training and AI/ML model inference based on the AI/ML model, the NG-RAN node 2 may provide the changed information to the NG-RAN node 1 via the NG-RAN node configuration update acknowledge message. The NG-RAN node 1 may store the changed information that has been received.

Furthermore, the method from the perspective of the first network node described in the present disclosure (e.g., FIG. 11) may be performed by the first wireless device (100) illustrated in FIG. 2.

More specifically, the UE may comprise at least one transceiver, at least one memory, and at least one processor operatively coupled to the at least one transceiver and the at least one memory. The at least one memory may store instructions that, based on being executed by the at least one processor, perform operations comprising: receiving, from a second network node, a first message comprising capability information informing whether the second network node can support a machine learning (ML) model; transmitting, to the second network node, a second message for requesting input data for a model processing generated by the ML model based on the capability information informing that the second network node can support the ML model; receiving, from the second network node, the input data; performing the model processing based on at least one of the input data received from the second network node or a measurement result received from a user equipment (UE); obtaining output data inferred from the model processing; and performing one or more actions based on the output data.

Furthermore, the method from the perspective of the first network node described in the present disclosure (e.g., FIG. 11) may be performed by the control of the processor (102) included in the first wireless device (100) illustrated in FIG. 2.

More specifically, an apparatus configured to operate in a wireless communication system comprises at least one processor, and a memory operatively coupled to the at least one processor and storing instructions that, based on being executed by the at least one processor, perform operations comprising: receiving, from a second network node, a first message comprising capability information informing whether the second network node can support a machine learning (ML) model; transmitting, to the second network node, a second message for requesting input data for a model processing generated by the ML model based on the capability information informing that the second network node can support the ML model; receiving, from the second network node, the input data; performing the model processing based on at least one of the input data received from the second network node or a measurement result received from a user equipment (UE); obtaining output data inferred from the model processing; and performing one or more actions based on the output data.

Furthermore, the method from the perspective of the first network node described in the present disclosure (e.g., FIG. 11) may be performed by software code stored in the memory (104) included in the first wireless device (100) illustrated in FIG. 2.

More specifically, a non-transitory computer readable medium (CRM) stores software code that implements instructions that, based on being executed by at least one processor, perform operations comprising: receiving, from a second network node, a first message comprising capability information informing whether the second network node can support a machine learning (ML) model; transmitting, to the second network node, a second message for requesting input data for a model processing generated by the ML model based on the capability information informing that the second network node can support the ML model; receiving, from the second network node, the input data; performing the model processing based on at least one of the input data received from the second network node or a measurement result received from a user equipment (UE); obtaining output data inferred from the model processing; and performing one or more actions based on the output data.

Furthermore, the method from the UE perspective described in the present disclosure (e.g., FIG. 12) may be performed by the second wireless device (200) illustrated in FIG. 2 and/or the UE (100) illustrated in FIG. 3.

More specifically, a user equipment (UE) in a wireless communication system comprises: a transceiver; a memory; and at least one processor operatively coupled to the transceiver and the memory, where the memory stores instructions that, based on being executed by the at least one processor, perform operations comprising: receiving, from a first network node, a measurement configuration; performing a measurement on one or more cells based on the measurement configuration; transmitting, to the first network node, a measurement report comprising a measurement result obtained based on the measurement; receiving, from the first network node, a mobility command generated based on the measurement result and a model processing related to a machine learning (ML) model; and performing a mobility to a target cell among the one or more cells based on the mobility command, wherein the first network node is configured to: receive, from a second network node, a first message comprising capability information informing whether the second network node can support the ML model; transmit, to the second network node, a second message for requesting input data for the model processing generated by the ML model based on the capability information informing that the second network node can support the ML model; receive, from the second network node, the input data; perform the model processing based on the input data and the measurement result; obtain output data inferred from the model processing; and generate the mobility command based on the output data.

The present disclosure can have various advantageous effects.

For example, when AI/ML-based mobility optimization is performed between adjacent base stations, a base station having an AI/ML model can inform base stations performing AI/ML model training and AI/ML model inference that it has an AI/ML model. When base stations performing AI/ML model training and AI/ML model inference request input data for this to adjacent base stations, they can only request it to base stations having an AI/ML model, which can reduce unnecessary signaling between base stations. In addition, this can avoid performance degradation that may occur when a UE moves between base stations.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a first network node in a wireless communication system, the method comprising:
receiving, from a second network node, a first message comprising capability information informing whether the second network node can support a machine learning (ML) model;
transmitting, to the second network node, a second message for requesting input data for a model processing generated by the ML model based on the capability information informing that the second network node can support the ML model;
receiving, from the second network node, the input data;
performing the model processing based on at least one of the input data received from the second network node or a measurement result received from a user equipment (UE);
obtaining output data inferred from the model processing; and
performing one or more actions based on the output data.

2. The method of claim 1, wherein the model processing comprises at least one of a model training or a model inference.

3. The method of claim 2, wherein the performing of the model processing comprises:
performing the model training based on at least one of input data for the model training received from the second network node or the measurement result received from the UE; and
after performing the model training, performing the model inference based on at least one of input data for the model inference received from the second network node or the measurement result received from the UE,
wherein the output data is obtained based on the model inference.

4. The method of claim 1, wherein the first message is an Xn establishment request message, and
wherein the method further comprises transmitting, to the second network node, an Xn establishment response message in response to the Xn establishment request message.

5. The method of claim 4, wherein the Xn establishment response message is the second message.

6. The method of claim 1, wherein the first message comprises data availability information informing whether the second network node can provide the input data for the model processing.

7. The method of claim 6, wherein the second message is transmitted to the second network node based on the data availability information informing that the second network node can provide the input data for the model processing.

8. The method of claim 6, further comprising receiving, from the second network node, information informing a change of the data availability information.

9. The method of claim 8, further comprising:
receiving, from the second network node, a radio access network (RAN) node configuration update message; and
transmitting, to the second network node, a RAN node configuration update acknowledge message,
wherein the information informing the change of the data availability information is included in the RAN node configuration update message.

10. The method of claim 8, transmitting, to the second network node, a radio access network (RAN) node configuration update message; and
receiving, from the second network, a RAN node configuration update acknowledge message,
wherein the information informing the change of the data availability information is included in the RAN node configuration update acknowledge message.

11. The method of claim 8, wherein the change of the data availability information comprises at least one of:
a change from the second network node being able to provide the input data for the model processing to the second network node being unable to provide the input data for the model processing; or
a change from the second network node being unable to provide the input data for the model processing to the second network node being able to provide the input data for the model processing.

12. The method of claim 1, wherein the one or more actions comprise at least one of a network energy saving action, a load balancing action, or a mobility optimization action.

13. The method of claim 12, wherein the network energy saving action comprises at least one of a cell activation, a cell deactivation or commanding the UE to perform a mobility,
wherein the input data for the network energy saving action comprises at least one of a current/predicted energy efficiency, a current/predicted resource status, or a current energy status, and
wherein the output data for the network energy saving action comprises at least one of an energy saving strategy, an predicted energy efficiency, an predicted energy status or a model output validity time.

14. The method of claim 12, wherein the load balancing action comprises commanding the UE to perform a mobility,
wherein the input data for the load balancing action comprises at least one of a current/predicted resource status or a UE performance measurement for a network node whose traffic load is lower than the first network, and
wherein the output data for the load balancing action comprises at least one of a selection of a target cell for load balancing, predicted resource status information for the first network node, predicted resource status information for a neighbor network node, a model output validity time, or UEs predicted to be selected to perform a mobility to a target network.

15. The method of claim 12, wherein the mobility optimization action comprises commanding the UE to perform a mobility,
wherein the input data for the mobility optimization action comprises at least one of UE trajectory prediction, a current/predicted resource status or a current/predicted UE traffic, and
wherein the output data for the mobility optimization action comprises at least one of a UE trajectory prediction, estimated arrival probability in conditional handover (CHO), a predicted handover target node, candidate cells predicted in CHO, handover execution timing, a resource reservation time window predicted for CHO, UE traffic prediction or model output validity time.

16. The method of claim 1, wherein the UE is in communication with at least one of another UE, network or autonomous vehicle.

17. A first network node in a wireless communication system, comprising:
a transceiver;
a memory; and
at least one processor operatively coupled to the transceiver and the memory,
wherein the memory stores instructions that, based on being executed by the at least one processor, perform operations comprising:
receiving, from a second network node, a first message comprising capability information informing whether the second network node can support a machine learning (ML) model;
transmitting, to the second network node, a second message for requesting input data for a model processing generated by the ML model based on the capability information informing that the second network node can support the ML model;
receiving, from the second network node, the input data;
performing the model processing based on at least one of the input data received from the second network node or a measurement result received from a user equipment (UE);
obtaining output data inferred from the model processing; and
performing one or more actions based on the output data.

18. The first network node of claim 17, wherein the first network node is configured to implement a method of one of claims 1 to 16.

19. A user equipment (UE) in a wireless communication system, comprising:
a transceiver;
a memory; and
at least one processor operatively coupled to the transceiver and the memory,
wherein the memory stores instructions that, based on being executed by the at least one processor, perform operations comprising:
receiving, from a first network node, a measurement configuration;
performing a measurement on one or more cells based on the measurement configuration;
transmitting, to the first network node, a measurement report comprising a measurement result obtained based on the measurement;
receiving, from the first network node, a mobility command generated based on the measurement result and a model processing related to a machine learning (ML) model; and
performing a mobility to a target cell among the one or more cells based on the mobility command,
wherein the first network node is configured to:
receive, from a second network node, a first message comprising capability information informing whether the second network node can support the ML model;
transmit, to the second network node, a second message for requesting input data for the model processing generated by the ML model based on the capability information informing that the second network node can support the ML model;
receive, from the second network node, the input data;
perform the model processing based on the input data and the measurement result;
obtain output data inferred from the model processing; and
generate the mobility command based on the output data.

20. A method performed by a user equipment (UE) in a wireless communication system, the method comprising:
receiving, from a first network node, a measurement configuration;
performing a measurement on one or more cells based on the measurement configuration;
transmitting, to the first network node, a measurement report comprising a measurement result obtained based on the measurement;
receiving, from the first network node, a mobility command generated based on the measurement result and a model processing related to a machine learning (ML) model; and
performing a mobility to a target cell among the one or more cells based on the mobility command,
wherein the first network node is configured to:
receive, from a second network node, a first message comprising capability information informing whether the second network node can support the ML model;
transmit, to the second network node, a second message for requesting input data for the model processing generated by the ML model based on the capability information informing that the second network node can support the ML model;
receive, from the second network node, the input data;
perform the model processing based on the input data and the measurement result;
obtain output data inferred from the model processing; and
generate the mobility command based on the output data.

21. The method of claim 20, wherein the first network node is configured to implement a method of one of claims 1 to 16.

22. An apparatus configured to operate in a wireless communication system, the apparatus comprising:
at least one processor; and
a memory operatively coupled to the at least one processor and storing instructions that, based on being executed by the at least one processor, perform operations comprising:
receiving, from a second network node, a first message comprising capability information informing whether the second network node can support a machine learning (ML) model;
transmitting, to the second network node, a second message for requesting input data for a model processing generated by the ML model based on the capability information informing that the second network node can support the ML model;
receiving, from the second network node, the input data;
performing the model processing based on at least one of the input data received from the second network node or a measurement result received from a user equipment (UE);
obtaining output data inferred from the model processing; and
performing one or more actions based on the output data.

23. A non-transitory computer readable medium (CRM) having stored thereon a software code implementing instructions that, based on being executed by at least one processor, perform operations comprising:
receiving, from a second network node, a first message comprising capability information informing whether the second network node can support a machine learning (ML) model;
transmitting, to the second network node, a second message for requesting input data for a model processing generated by the ML model based on the capability information informing that the second network node can support the ML model;
receiving, from the second network node, the input data;
performing the model processing based on at least one of the input data received from the second network node or a measurement result received from a user equipment (UE);
obtaining output data inferred from the model processing; and
performing one or more actions based on the output data.
